# EUROPEAN PATENT SPECIFICATION

(11) **EP 3 961 421 B1**
(45) Date of publication and mention of the grant of the patent: **07.06.2023**
(21) Application number: 20931705.6
(22) Date of filing: 16.10.2020
(51) Int. Cl.: G01C 21/00

(54) **SEMANTIC MAP UPDATING METHOD AND APPARATUS, VEHICLE, AND STORAGE MEDIUM**
VERFAHREN UND VORRICHTUNG ZUR AKTUALISIERUNG VON SEMANTISCHEN KARTEN, FAHRZEUG UND SPEICHERMEDIUM
PROCÉDÉ ET APPAREIL DE MISE À JOUR DE CARTE SÉMANTIQUE, VÉHICULE ET SUPPORT DE STOCKAGE

(30) Priority: 01.07.2020 CN 202010632637
(43) Date of publication of application: 02.03.2022
(73) Proprietor: Guangzhou Xiaopeng Autopilot Technology Co., Ltd., Guangzhou, Guangdong 510000 (CN)
(72) Inventor: LIU, Zhongyuan, Guangzhou, Guangdong 510000 (CN); CHAI, Wennan, Guangzhou, Guangdong 510000 (CN); LI, Hongjun, Guangzhou, Guangdong 510000 (CN); HUANG, Ya, Guangzhou, Guangdong 510000 (CN); LAI, Jianming, Guangzhou, Guangdong 510000 (CN); JIANG, Shaofeng, Guangzhou, Guangdong 510000 (CN)
(74) Representative: Ran, Handong
(86) International application number: PCT/CN2020/121497
(87) International publication number: WO 2022/000858

(56) References cited:
- CN-A- 105 631 017
- CN-A- 106 767 812
- CN-A- 109 341 706
- CN-A- 110 032 181
- CN-A- 110 222 066
- CN-A- 110 517 483
- CN-A- 110 781 201
- US-A1- 2016 371 394
- US-A1- 2019 323 843

## Description

### Field of Invention

The present invention relates to the field of maps, and particularly relates to a semantic map update method and device, a vehicle and a storage medium.

### Background

In the prior art, in a parking lot or a similar scenario, the main mapping solutions are laser Simultaneous Localization and Mapping (SLAM) and visual SLAM, where a high precision laser radar or depth camera is utilized for scanning to obtain point cloud data or image data to carry out mapping of the parking lot.

The methods above have obvious defects: the laser SLAM solution is high in cost and difficult to popularize; and visual SLAM has high requirements for the environment, and when the light requirement is not met or the environment lacks textures, a mapping and localization fault may be caused.

Patent application publication CN110781201A discloses an automatic updating method for road topological relation data, which comprises the following steps: acquiring newly acquired road data and matching the newly acquired road data with original road data in a database; according to the matching result, obtaining first road section data and second road section data which have an in-out flow relationship; executing a preset judgment operation to determine an updating type of the to-be-updated topological relation; and executing a corresponding updating operation according to the updating type.

Patent application publication US2016/371394A1 discloses methods and systems for generating a map for indoor localization, wherein the data graph is matched with a predefined ground truth graph defining physical coordinates of traversable paths.

Patent application publication CN110222066A discloses a GIS-based map data updating method and system, comprising: importing an object corresponding to a to-be-updated map in an application system as a working layer. Each object in the working layer is compared with the object in the to-be-updated map. A matching state attributes of each object of the working layer is determined according to a comparison result. Each object in the to-be-updated map is compared with the object in the working layer. The map is updated according to the matching status attribute of each object of the working layer and the comparison result. The working layer is deleted after updating the map.

### Summary of Invention

Embodiments of the present invention disclose a semantic map update method and device, a vehicle and a storage medium and can solve at least one of the problems in the prior art.

Aspects of the present invention are set out in the accompanying claims.

According to a first aspect, an embodiment of the present invention discloses a semantic map update method according to claim 1. Further embodiments disclose a device according to claim 4, a vehicle according to claim 7 and a computer readable storage medium according to claim 8. Compared to the prior art, the embodiments of the present invention have the beneficial effects as follows: the stored map can be updated by obtaining latest maps in real time, so that the stored map is maintained timely; the specific matching method is convenient to execute and has prominent effectiveness in providing both high matching efficiency and high matching quality.

### Brief Description of Drawings

In order to illustrate the technical solution of the embodiments of the present invention more clearly, drawings for the embodiments will be briefly described as follows. It is obvious that the described drawings are only related to some embodiments of the present invention.
Fig. 1 is a schematic flowchart of a semantic map update method according to an embodiment of the present invention;
Fig. 2 is a schematic diagram I of node matching and merging according to an embodiment of the present invention;
Fig. 3 is a schematic diagram II of node matching and merging according to an embodiment of the present invention;
Fig. 4 is a schematic diagram III of node matching and merging according to an embodiment of the present invention; and
Fig. 5 is a schematic diagram of modules in a semantic map update device according to an embodiment of the present invention.

### Detailed Description

The technical solution of the embodiments of the present invention will be described in a clear and fully understandable way in connection with the drawings in the embodiments of the present invention. It is obvious that the described embodiments are just some but not all of the embodiments of the present invention. Based on the embodiments herein, those ordinary skilled in the art can obtain other embodiments, without any inventive effort, which should be within the scope of protection of the present invention, as set out in the appended claims.

It should be noted that in the description and claims of the present invention, terms such as "first", "second", "third", "fourth" and the like are used for distinguishing different objects, but are not construed as indicating specific order.

In the embodiments of the present invention, terms such as "include" and "have" and any variations thereof are intended to cover the described features non-exclusively. For example, processes, methods, systems, products or equipment including a series of steps or units are not limited to those steps or units clearly listed, but may include other steps or units not clearly listed or inherent for those processes, methods, products or equipment.

The embodiments of the present invention disclose a semantic map update method and device, a vehicle and a storage medium. A semantic map is formed by semantic feature points and routes; for ease of description, in the embodiments of the present invention, the semantic feature points are called nodes; the nodes commonly correspond to speed bumps, entry-exit slope points, road connection points, parking spots, obstacle positions and the like in the true world; and the routes are paths between the nodes.

The semantic map is generally obtained on the basis of records made by vehicle-mounted sensors and the like after a vehicle runs by, and for example, a specific method of generating a route map at a vehicle end in a parking lot scenario may be implemented as follows: a vehicle enters a parking lot, and a parking lot entry is identified through a visual sensor to start mapping; as the vehicle runs in the parking lot, various sensors obtain information of speed bumps, entry-exit slope points, road connection points, parking spots, obstacle positions and the like through collected data, and the information is used as nodes of a route map; route directions and lengths between the nodes are obtained by adopting an Inertial Measurement Unit (IMU) and a speedometer, when the vehicle runs out of the parking lot, an exit is identified, each node and route information identified between the entry and the exit are added to the route map, and entry and exit information is also used as a part of the route map so as to generate the route map of the parking lot.

Some methods for identifying the nodes, for example, may be implemented as follows: motion data including information of a vehicle speed, an IMU observation quantity, a steering wheel angle, a vehicle posture and the like is acquired while a vehicle is running, and the entry-exit slope points are identified according to the posture and the IMU; speed bumps are identified according to the speed and the IMU; and road connection points are identified according to a steering wheel and the IMU.

It is known from the above description that through the application of the semantic map, compared to the solution of the prior art, the solution uses existing sensors of the vehicle for acquiring the information to carry out mapping so as to solve the problem of high cost of the laser SLAM solution; and the solution is little influenced by the environment when in use so as to solve the problem that the visual SLAM has high requirements for the environment and often results in mapping and localization faults.

After the vehicle acquires a semantic map, the currently acquired map can be uploaded to a server and saved thereon, or can be locally stored in the vehicle. In the embodiments of the present invention, the semantic map currently acquired by the vehicle can also be used for updating a semantic map on the server or updating a local semantic map of the vehicle. Such updating can be carried out, for example, by a matching and merging method specifically.

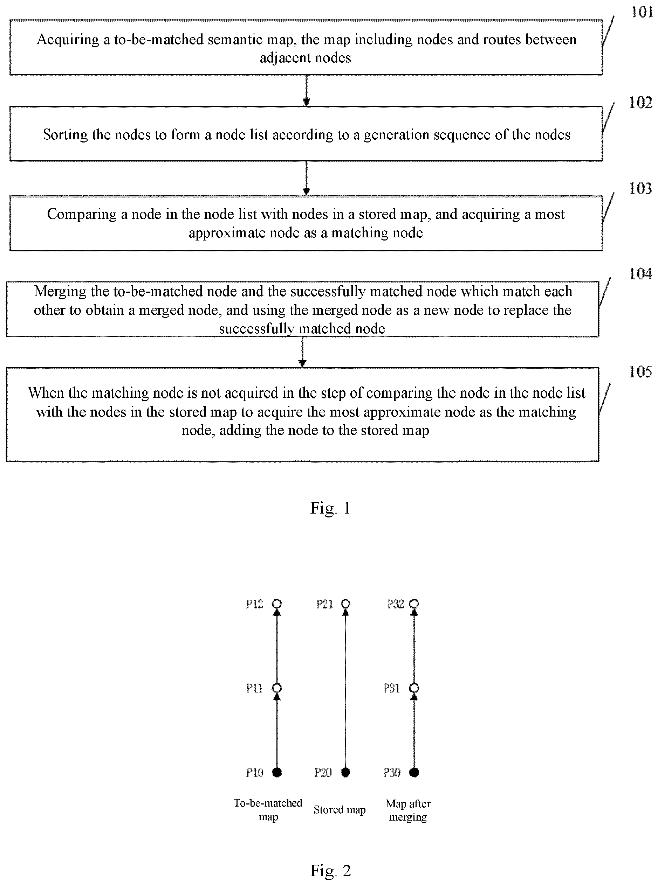

The semantic map update method provided by the embodiment of the present invention will be illustrated below in connection with specific examples. Fig. 1 is a schematic flowchart of a semantic map update method according to an embodiment of the present invention, including the following steps.

In step S101, a semantic map to be matched is acquired, and the map includes nodes and routes between adjacent nodes.

In step S102, the nodes are sorted to form a node list according to a generation sequence of the nodes.

In step S103, a node in the node list is compared with nodes on a stored map to obtain a most approximate node as a matching node, the selected node in the node list is called a node to be matched or a to-be-matched node, a node compared with the node to be matched is called a matched node, and the most approximate node is also called a successfully matched node.

When the node to be matched is selected or determined and during matching against the matched nodes, a route (denoted as a route to be matched) between the node to be matched and a previous node in the node list is acquired first, then all matched routes connected with the matched nodes are acquired. It is then determined whether there is a route among the matched routes that matches the route to be matched and whether a length difference between the matching route and the route to be matched is less than a predetermined length difference. If the conditions above are met, it is determined that the matched node matches the node to be matched. The predetermined length difference may be, for example, 5 meters.

It may be possible that after the determination as to whether there is a route in the matched routes that matches the route to be matched, it is found that the length difference between the matching route and the route to be matched is greater than the predetermined length difference. In other words, the route to be matched is shorter. This indicates that a new node, i.e., the node to be matched, is found in a current new map. This new node needs to be added to the map to update the map. A specific method for performing this update is as follows: a new node is added to the matching route connected with the matched node, and a length between the new node and the matched node is set to be the length of the route to be matched.

In the above-mentioned illustration, a method of determining whether the matched route matches the route to be matched is as follows: the route to be matched and the matched route share at least one common node, and an included angle between the route directions of the route to be matched and the matched route is smaller than a predetermined included angle difference. The predetermined included angle difference may be, for example, 30°.

In step S104, the node to be matched and the successfully matched node which match each other are merged to obtain a merged node, and the merged node is used as a new node to replace the successfully matched node.

In step S105, when a matching node is not acquired in the step of comparing the node in the node list with the nodes in the stored map to acquire the most approximate node as the matching node, the node to be matched is added to the stored map.

By the semantic map update method according to the above-mentioned embodiment of the present invention, the stored map can be updated by obtaining latest maps in real time, so that the stored map is maintained timely; the specific matching manner is convenient to execute and effective in achieving both high matching efficiency and high matching quality.

A principle of matching and merging of the nodes will be illustrated below in combination with the drawings.

Fig. 2 is a schematic diagram I of node matching and merging according to an embodiment of the present invention. As shown in the figure, the semantic map to be matched includes nodes P10, P11 and P12, and the stored map includes nodes P20 and P21. It can be seen from the figure that node P10 matches node P20 (a merged node is denoted as P30 in a map after merging), and node P12 matches with node P21 (a merged node is denoted as P32 in the map after merging). There is no to-be-matched node that matches node P11 in the stored map in the matching process. Thus, a map after matching and merging is formed by adding node P11 (which is denoted as P31 in the map after merging) to the stored map.

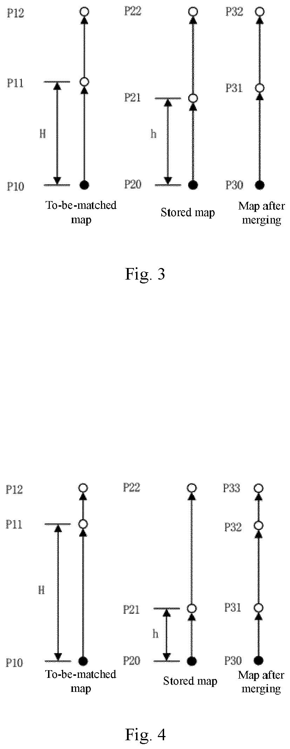

Fig. 3 is another schematic diagram II of node matching and merging according to an embodiment of the present invention. As shown in the figure, the semantic map to be matched includes nodes P10, P11 and P12, and the stored map includes nodes P20, P21 and P22, where a distance between nodes P11 and P10 is H, and a distance between nodes P21 and P20 is h. The difference between H and h does not exceed the predetermined length difference, so it is determined that node P11 and node P21 match each other (a merged node is denoted as P31 in a map after merging).

Fig. 4 is yet another schematic diagram III of node matching and merging according to an embodiment of the present invention. As shown in the figure, the semantic map to be matched includes nodes P10, P11 and P12, the stored map includes nodes P20, P21 and P22, where a distance between the nodes P11 and P10 is H, and a distance between the nodes P21 and P20 is h. The difference between H and h exceeds the predetermined length difference, so it is determined that node P11 does not match node P21, and then node P11 (which is denoted as P32 in a map after merging) is added to the map after merging.

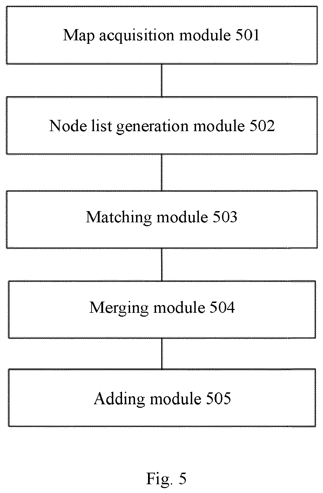

An embodiment of the present invention further provides a semantic map update device. Fig. 5 is a schematic diagram of modules in a semantic map update device according to an embodiment of the present invention, including the following modules.

A map acquisition module 501 is configured to acquire a semantic map to be matched, the map comprising nodes and routes between adjacent nodes.

A node list generation module 502 is configured to sort the nodes to form a node list according to a generation sequence of the nodes.

A matching module 503 is configured to compare a node in the node list with nodes on a stored map to acquire a most approximate node as a matching node, wherein the selected node in the node list is called a node to be matched, a node on the stored map compared with the node to be matched is called a matched node, and the most approximate node is also called a successfully matched node.

When the node to be matched is selected or determined and is matched against the matched nodes, a route (denoted as a route to be matched) between the node to be matched and a previous node in the node list is acquired first, and then all matched routes connected with the matched nodes are acquired. It is then determined whether there is a route among the matched routes that matches the route to be matched, and if so, whether a length difference between the matching route and the route to be matched is less than a predetermined length difference. If the conditions above are met, it is determined that the matched node matches the node to be matched. The predetermined length difference may be, for example, 5 meters.

It may be possible that, after the determination as to whether the matched routes include a route that matches the route to be matched, it is found that the length difference between the matching route and the route to be matched is greater than the predetermined length difference. In other words, the route to be matched is shorter. This means that a new node, i.e., the node to be matched, is found in a current new map. This new node needs to be added to the map to update the map. A specific update method is as follows: a new node is added to the matching route connected with the matched node, and a length between the new node and the matched node specifically is set as the length of the route to be matched.

In the above-mentioned illustration, a method of determining whether the matched route matches the route to be matched is based on the following criteria: the route to be matched and the matched route share at least one common node, and an included angle between the route directions of the route to be matched and the matched route is smaller than a predetermined included angle difference. The predetermined included angle difference may be, for example, 30°.

A merging module 504 is configured to merge the node to be matched and the successfully matched node which match each other to obtain a merged node, and to use the merged node as a new node to replace the successfully matched node.

An adding module 505 is configured to , when a matching node is not acquired in the step of comparing the node in the node list with the nodes in the stored map to acquire the most approximate node as the matching node, add the node to the stored map.

Another embodiment of the present invention provides a vehicle. The vehicle includes any one of the above-mentioned semantic map update devices.

Another embodiment of the present invention further provides a computer readable storage medium storing a computer program, wherein the computer program enables a computer to execute any one of the above-mentioned semantic map update methods.

Those ordinary skilled in the art should understand that all or part of the steps in various methods of the above-mentioned embodiments can be completed by instructing related hardware with the program, the program may be stored in one computer readable storage medium, and the storage medium includes a Read-Only Memory (ROM), a Random Access Memory (RAM), a Programmable Read-only Memory (PROM), an Erasable Programmable Read Only Memory (EPROM), a One-time Programmable Read-Only Memory (OTPROM), an Electrically-Erasable Programmable Read-Only Memory (EEPROM), a Compact Disc Read-Only Memory (CD-ROM) or other compact disc memories, a magnetic disc memory, a magnetic tape memory, or any other computer readable mediums capable of being used for carrying or storing data.

The semantic map update method and device, the vehicle and the storage medium disclosed by the embodiments of the present invention are illustrated in detail above, the specific examples are applied herein to illustrate the principle and the embodiments of the present invention, and illustration of the embodiments above is merely used for helping to understand the method of the present invention and the core thought thereof; and meanwhile, those skilled in the art can make changes to the specific embodiments and the application scope according to the scope of the present invention as defined in the appended claims, and from the above, the content of the Description should not be understood as limitation to the present invention.

## Claims

1. A method of updating a semantic map, comprising:
acquiring (101) a semantic map to be matched, the map comprising nodes and routes between adjacent nodes;
sorting (102) the nodes to form a node list according to a generation sequence of the nodes;
comparing (103) a selected node in the node list with nodes on a stored map to acquire a most approximate node as a matching node, wherein the selected node in the node list is called a node to be matched, and a node compared with the node to be matched is called a matched node;
wherein the step of comparing the selected node in the node list with the nodes in the stored map to acquire the most approximate node as the matching node comprises:
comparing the node to be matched in the node list with the matched nodes in the stored map, and taking a matched node satisfying the following conditions as the matching node:
a route connected with the node to be matched matches at least one route connected with the matched node, and a length difference between the two matching routes is less than a predetermined length difference;
merging (104) the node to be matched, if matched, and the matching node which match each other to obtain a merged node, and replacing the matching node with the merged node to form a new node; and
when a matching node is not acquired in the step of comparing the selected node in the node list with the nodes in the stored map to acquire the most approximate node as the matching node, adding (105) the selected node to the stored map.

2. The method according to claim 1, further comprising:
if at least one route connected with the matched node matches the route connected with the node to be matched and a length of the matched route connected with the matched node is greater than a length of the route connected with the node to be matched by the predetermined length difference, adding a new node to the matched route connected with the matched node, a length between the new node and the matched node being equal to the length of the route connected with the node to be matched.

3. The method according to claim 1, wherein whether the route connected with the node to be matched matches at least one route connected with the matched node is determined based on whether the following matching conditions are met:
the route connected with the node to be matched and the at least one route connected with the matched node share at least one common node, and an included angle between a route direction of the route connected with the node to be matched and a route direction of the at least one route connected with the matched node is smaller than a predetermined included angle difference.

4. A device for updating a semantic map, comprising:
a map acquisition module (501), configured to acquire a semantic map to be matched, the map comprising nodes and routes between adjacent nodes;
a node list generation module (502), configured to sort the nodes to form a node list according to a generation sequence of the nodes;
a matching module (503), configured to compare a selected node in the node list with nodes on a stored map to acquire a most approximate node as a matching node, wherein the selected node in the node list is called a node to be matched, and a node compared with the node to be matched is called a matched node;
wherein the matching module is configured to:
compare the node to be matched in the node list with the matched nodes in the stored map, and take a matched node satisfying the following conditions as the matching node:
a route connected with the node to be matched matches at least one of the routes connected with the matched node, and a length difference between the two matching routes is less than a predetermined length difference;
a merging module (504), configured to merge the node to be matched and the matching node which match each other to obtain a merged node, and use the merged node as a new node to replace the matching node; and
an adding module (505), configured to, when a matching node is not acquired in the step of comparing the selected node in the node list with the nodes in the stored map to acquire the most approximate node as the matching node, add the node to the stored map.

5. The device according to claim 4, wherein the adding module (505) adds a new node to the matched route connected with the matched node, a length between the new node and the matched node being equal to the length of the route connected with the node to be matched, if at least one route connected with the matched node matches the route connected with the node to be matched and a length of the matched route connected with the matched node is greater than a length of the route connected with the node to be matched by the predetermined length difference.

6. The device according to claim 4, wherein the matching module (503) determines whether the route connected with the node to be matched matches at least one route connected with the matched node based on whether the following matching conditions are met:
the route connected with the node to be matched and the at least one route connected with the matched node share at least one common node, and an included angle between a route direction of the route connected with the node to be matched and a route direction of the at least one route connected with the matched node is smaller than a predetermined included angle difference.

7. A vehicle comprising the device for updating a semantic map according to any one of claims 4 to 6.

8. A computer readable storage medium comprising a computer program which, when executed by a computer, causes the computer to execute the method of updating a semantic map according to any one of claims 1 to 3.

## Patentansprüche

1. Verfahren zum Aktualisieren einer semantischen Karte, das Folgendes beinhaltet:
Erfassen (101) einer abzugleichenden semantischen Karte, wobei die Karte Knoten und Routen zwischen benachbarten Knoten umfasst;
Sortieren (102) der Knoten, um eine Knotenliste gemäß einer Erzeugungssequenz der Knoten zu bilden;
Vergleichen (103) eines ausgewählten Knotens in der Knotenliste mit Knoten auf einer gespeicherten Karte, um einen nächstliegenden Knoten als übereinstimmenden Knoten zu erfassen, wobei der ausgewählte Knoten in der Knotenliste abzugleichender Knoten genannt wird und ein mit dem abzugleichenden Knoten verglichener Knoten abgeglichener Knoten genannt wird;
wobei der Schritt des Vergleichens des ausgewählten Knotens in der Knotenliste mit den Knoten in der gespeicherten Karte zum Erfassen des nächstliegenden Knotens als übereinstimmenden Knoten Folgendes beinhaltet:
Vergleichen des abzugleichenden Knotens in der Knotenliste mit den abgeglichenen Knoten in der gespeicherten Karte und Nehmen eines abgeglichenen Knotens, der die folgenden Bedingungen erfüllt, als den übereinstimmenden Knoten:
eine mit dem abzugleichenden Knoten verbundene Route stimmt mit mindestens einer mit dem abgeglichenen Knoten verbundenen Route überein, und eine Längendifferenz zwischen den beiden übereinstimmenden Routen ist kleiner als eine vorbestimmte Längendifferenz;
Zusammenführen (104) des abzugleichenden Knotens nach dem Abgleich und des übereinstimmenden Knotens, die miteinander übereinstimmen, um einen zusammengeführten Knoten zu erhalten, und Ersetzen des übereinstimmenden Knotens durch den zusammengeführten Knoten, um einen neuen Knoten zu bilden; und
Hinzufügen (105) des ausgewählten Knotens zu der gespeicherten Karte, wenn in dem Schritt des Vergleichens des ausgewählten Knotens in der Knotenliste mit den Knoten in der gespeicherten Karte zum Erfassen des nächstliegenden Knotens als übereinstimmenden Knoten kein übereinstimmender Knoten erfasst wird.

2. Verfahren nach Anspruch 1, das ferner Folgendes beinhaltet:
Hinzufügen, wenn mindestens eine mit dem abgeglichenen Knoten verbundene Route mit der mit dem abzugleichenden Knoten verbundenen Route übereinstimmt und eine Länge der mit dem abgeglichenden Knoten verbundenen abgeglichenen Route um die vorbestimmte Längendifferenz größer ist als eine Länge der mit dem abzugleichenden Knoten verbundenen Route, eines neuen Knotens zu der mit dem abgeglichenen Knoten verbundenen abgeglichenen Route, wobei eine Länge zwischen dem neuen Knoten und dem abgeglichenen Knoten gleich der Länge der mit dem abzugleichenden Knoten verbundenen Route ist.

3. Verfahren nach Anspruch 1, wobei die Feststellung, ob die mit dem abzugleichenden Knoten verbundene Route mit mindestens einer mit dem abgeglichenen Knoten verbundenen Route übereinstimmt, auf der Basis davon erfolgt, ob die folgenden Abgleichbedingungen erfüllt sind:
die mit dem abzugleichenden Knoten verbundene Route und die mindestens eine mit dem abgeglichenen Knoten verbundene Route teilen mindestens einen gemeinsamen Knoten, und ein eingeschlossener Winkel zwischen einer Routenrichtung der mit dem abzugleichenden Knoten verbundenen Route und einer Routenrichtung der mindestens einen mit dem abgeglichenen Knoten verbundenen Route ist kleiner als eine vorbestimmte eingeschlossene Winkeldifferenz.

4. Gerät zum Aktualisieren einer semantischen Karte, das Folgendes umfasst:
ein Kartenerfassungsmodul (501), das zum Erfassen einer abzugleichenden semantischen Karte konfiguriert ist, wobei die Karte Knoten und Routen zwischen benachbarten Knoten umfasst;
ein Knotenlistenerzeugungsmodul (502), das zum Sortieren der Knoten konfiguriert ist, um eine Knotenliste gemäß einer Erzeugungssequenz der Knoten zu bilden;
ein Abgleichmodul (503), das zum Vergleichen eines ausgewählten Knotens in der Knotenliste mit Knoten auf einer gespeicherten Karte konfiguriert ist, um einen nächstliegenden Knoten als übereinstimmenden Knoten zu erfassen, wobei der ausgewählte Knoten in der Knotenliste abzugleichender Knoten genannt wird und ein mit dem abzugleichenden Knoten verglichener Knoten abgeglichener Knoten genannt wird;
wobei das Abgleichmodul konfiguriert ist zum:
Vergleichen des abzugleichenden Knotens in der Knotenliste mit den abgeglichenen Knoten in der gespeicherten Karte und Nehmen eines abgeglichenen Knotens, der die folgenden Bedingungen erfüllt, als übereinstimmenden Knoten:
eine mit dem abzugleichenden Knoten verbundene Route stimmt mit mindestens einer der mit dem abgeglichenen Knoten verbundenen Routen überein, und eine Längendifferenz zwischen den beiden übereinstimmenden Routen ist kleiner als eine vorbestimmte Längendifferenz;
ein Zusammenführungsmodul (504), konfiguriert zum Zusammenführen des abzugleichenden Knotens und des übereinstimmenden Knotens, die miteinander übereinstimmen, um einen zusammengeführten Knoten zu erhalten, und Benutzen des zusammengeführten Knotens als neuen Knoten zum Ersetzen des übereinstimmenden Knotens; und
ein Hinzufügungsmodul (505), das zum Hinzufügen des Knotens zu der gespeicherten Karte konfiguriert ist, wenn in dem Schritt des Vergleichens des ausgewählten Knotens in der Knotenliste mit den Knoten in der gespeicherten Karte zum Erfassen des nächstliegenden Knotens als übereinstimmenden Knoten kein übereinstimmender Knoten erfasst wird.

5. Gerät nach Anspruch 4, wobei das Hinzufügungsmodul (505) einen neuen Knoten zu der mit dem abgeglichenen Knoten verbundenen abgeglichenen Route hinzufügt, wobei eine Länge zwischen dem neuen Knoten und dem abgeglichenen Knoten gleich der Länge der mit dem abzugleichenden Knoten verbundenen Route ist, wenn mindestens eine mit dem abgeglichenen Knoten verbundene Route mit der mit dem abzugleichenden Knoten verbundenen Route übereinstimmt und eine Länge der mit dem abgeglichenen Knoten verbundenen abgeglichenen Route um die vorbestimmte Längendifferenz größer ist als eine Länge der mit dem abzugleichenden Knoten verbundenen Route.

6. Gerät nach Anspruch 4, wobei das Abgleichmodul (503) auf der Basis davon feststellt, ob die mit dem abzugleichenden Knoten verbundene Route mit mindestens einer mit dem abgeglichenen Knoten verbundenen Route übereinstimmt, wenn die folgenden Abgleichbedingungen erfüllt sind:
die mit dem abzugleichenden Knoten verbundene Route und die mindestens eine mit dem abgeglichenen Knoten verbundene Route teilen mindestens einen gemeinsamen Knoten, und ein eingeschlossener Winkel zwischen einer Routenrichtung der mit dem abzugleichenden Knoten verbundenen Route und einer Routenrichtung der mindestens einen mit dem abgeglichenen Knoten verbundenen Route ist kleiner als eine vorbestimmte eingeschlossene Winkeldifferenz.

7. Fahrzeug, das das Gerät zum Aktualisieren einer semantischen Karte nach einem der Ansprüche 4 bis 6 umfasst.

8. Computerlesbares Speichermedium mit einem Computerprogramm, das bei Ausführung durch einen Computer bewirkt, dass der Computer das Verfahren zum Aktualisieren einer semantischen Karte nach einem der Ansprüche 1 bis 3 ausführt.

## Revendications

1. Procédé de mise à jour d'une carte sémantique, comprenant :
une acquisition (101) d'une carte sémantique à mettre en correspondance, la carte comprenant des noeuds et des routes entre des noeuds adjacents ;
un tri (102) des noeuds pour former une liste de noeuds selon une séquence de génération des noeuds ;
une comparaison (103) d'un noeud sélectionné dans la liste de noeuds avec des noeuds sur une carte stockée pour acquérir un noeud le plus approximatif à titre de noeud correspondant, dans lequel le noeud sélectionné dans la liste de noeuds est appelé un noeud à mettre en correspondance, et un noeud comparé au noeud à mettre en correspondance est appelé un noeud mis en correspondance;
dans lequel l'étape de comparaison du noeud sélectionné dans la liste de noeuds avec les noeuds dans la carte stockée pour acquérir le noeud le plus approximatif à titre de noeud correspondant comprend :
une comparaison du noeud à mettre en correspondance dans la liste de noeuds avec les noeuds mis en correspondance dans la carte stockée, et une considération d'un noeud mis en correspondance répondant aux conditions suivantes comme le noeud correspondant :
une route connectée au noeud à mettre en correspondance correspond à au moins une route connectée au noeud mis en correspondance, et une différence de longueur entre les deux routes correspondantes est inférieure à une différence de longueur prédéterminée ;
une fusion (104) du noeud à mettre en correspondance, si mis en correspondance, et du noeud correspondant qui se correspondent pour obtenir un noeud fusionné, et un remplacement du noeud correspondant avec le noeud fusionné pour former un nouveau noeud ; et
lorsqu'un noeud correspondant n'est pas acquis dans l'étape de comparaison du noeud sélectionné dans la liste de noeuds avec les noeuds dans la carte stockée pour acquérir le noeud le plus approximatif à titre de noeud correspondant, un ajout (105) du noeud sélectionné à la carte stockée.

2. Procédé selon la revendication 1, comprenant en outre :
si au moins une route connectée au noeud mis en correspondance correspond à la route connectée au noeud à mettre en correspondance et une longueur de la route mise en correspondance connectée au noeud mis en correspondance est supérieure à une longueur de la route connectée au noeud à mettre en correspondance de la différence de longueur prédéterminée, un ajout d'un nouveau noeud à la route mise en correspondance connectée au noeud mis en correspondance, une longueur entre le nouveau noeud et le noeud mis en correspondance étant égale à la longueur de la route connectée au noeud à mettre en correspondance.

3. Procédé selon la revendication 1, dans lequel le fait que la route connectée avec le noeud à mettre en correspondance corresponde ou non à au moins une route connectée avec le noeud mis en correspondance est déterminé sur la base du fait que les conditions de correspondance suivantes sont remplies ou non :
la route connectée au noeud à mettre en correspondance et l'au moins une route connectée au noeud mis en correspondance partagent au moins un noeud commun, et un angle inclus entre une direction de route de la route connectée au noeud à mettre en correspondance et une direction de route de l'au moins une route connectée au noeud mis en correspondance est inférieur à une différence d'angle inclus prédéterminée.

4. Dispositif de mise à jour d'une carte sémantique, comprenant :
un module d'acquisition de carte (501), configuré pour acquérir une carte sémantique à mettre en correspondance, la carte comprenant des noeuds et des routes entre des noeuds adj acents ;
un module de génération de liste de noeuds (502), configuré pour trier les noeuds pour former une liste de noeuds selon une séquence de génération des noeuds ;
un module de mise en correspondance (503), configuré pour comparer un noeud sélectionné dans la liste de noeuds avec des noeuds sur une carte stockée pour acquérir un noeud le plus approximatif à titre de noeud correspondant, dans lequel le noeud sélectionné dans la liste de noeuds est appelé un noeud à mettre en correspondance, et un noeud comparé au noeud à mettre en correspondance est appelé un noeud mis en correspondance ;
dans lequel le module de mise en correspondance est configuré pour :
comparer le noeud à mettre en correspondance dans la liste de noeuds avec les noeuds mis en correspondance dans la carte stockée, et considérer un noeud mis en correspondance répondant aux conditions suivantes comme le noeud correspondant :
une route connectée au noeud à mettre en correspondance correspond à au moins une des routes connectées au noeud mis en correspondance, et une différence de longueur entre les deux routes correspondantes est inférieure à une différence de longueur prédéterminée ;
un module de fusion (504), configuré pour fusionner le noeud à mettre en correspondance et le noeud correspondant qui se correspondent pour obtenir un noeud fusionné, et utiliser le noeud fusionné à titre de nouveau noeud pour remplacer le noeud correspondant ; et
un module d'ajout (505), configuré pour, lorsqu'un noeud correspondant n'est pas acquis dans l'étape de comparaison du noeud sélectionné dans la liste de noeuds avec les noeuds dans la carte stockée pour acquérir le noeud le plus approximatif à titre de noeud correspondant, ajouter le noeud à la carte stockée.

5. Dispositif selon la revendication 4, dans lequel le module d'ajout (505) ajoute un nouveau noeud à la route mise en correspondance connectée au noeud mis en correspondance, une longueur entre le nouveau noeud et le noeud mis en correspondance étant égale à la longueur de la route connectée au noeud à mettre en correspondance, si au moins une route connectée au noeud mis en correspondance correspond à la route connectée au noeud à mettre en correspondance et une longueur de la route mise en correspondance connectée au noeud mis en correspondance est supérieure à une longueur de la route connectée au noeud à mettre en correspondance de la différence de longueur prédéterminée.

6. Dispositif selon la revendication 4, dans lequel le module de mise en correspondance (503) détermine le fait que la route connectée avec le noeud à mettre en correspondance corresponde ou non à au moins une route connectée avec le noeud mis en correspondance sur la base du fait que les conditions de correspondance suivantes sont remplies ou non :
la route connectée au noeud à mettre en correspondance et l'au moins une route connectée au noeud mis en correspondance partagent au moins un noeud commun, et un angle inclus entre une direction de route de la route connectée au noeud à mettre en correspondance et une direction de route de l'au moins une route connectée au noeud mis en correspondance est inférieur à une différence d'angle inclus prédéterminée.

7. Véhicule comprenant le dispositif pour une mise à jour d'une carte sémantique selon l'une quelconque des revendications 4 à 6.

8. Support de stockage lisible par ordinateur comprenant un programme informatique qui, lorsqu'il est exécuté par un ordinateur, amène l'ordinateur à exécuter le procédé de mise à jour d'une carte sémantique selon l'une quelconque des revendications 1 à 3.
